# EUROPEAN PATENT APPLICATION

(11) **EP 4 683 196 A1**
(43) Date of publication of application: **21.01.2026**
(21) Application number: 25184234.0
(22) Date of filing: 20.06.2025
(51) Int. Cl.: H02M 1/32, H02M 1/36, H02M 3/158

(54) **SYSTEMS AND METHODS FOR SYNCHRONIZATION OF NON-ISOLATED BOOST CONVERTERS IN A POWER SUPPLY**

(30) Priority: 20.07.2024 IN 202421055503
(71) Applicant: Vertiv Corporation, Westerville, OH 43082 (US)
(72) Inventor: TRIVEDI, Nitin, 313004 Udaipur (IN); SHARMA, Priyal, 306401 Pali (IN)
(74) Representative: Bryn-Jacobsen, Caelia

(57) **Abstract**

A power supply system 100 for synchronizing operation of plurality of converters 106 connected in parallel manner is disclosed. The power supply system 100 comprises a plurality of rectifiers 104 configured to convert an AC input into a regulated DC input voltage supplied to the converters 106. Each converter 106 is equipped with a MOSFET 202 and is connected to a CAN bus 204. A triggering unit 206 within the CAN bus 204 designates one converter 106 as the master, which transmits a synchronization signal to the slave converters to simultaneously turn ON all MOSFETs 202 during power-on. A memory 208 stores predefined threshold values of gate terminal voltage. The power supply system 100 ensures reliable start up by avoiding overcurrent trips, enabling effective load sharing, and minimizing semiconductor stress during power-on events.

## Description

### FIELD OF INVENTION

The present invention generally relates to the field of power electronics. More specifically, the present invention is related to a system and a method for synchronization of multiple non-isolated boost converters in a power supply.

### BACKGROUND OF THE INVENTION

The subject matter discussed in the background section should not be assumed to be prior art merely as a result of its mention in the background section. Similarly, a problem mentioned in the background section or associated with the subject matter of the background section should not be assumed to have been previously recognized in the prior art. The subject matter in the background section merely represents different approaches, which in and of themselves may also correspond to implementations of the claimed technology.

Power supply systems designed for high-current applications frequently employ multiple non-isolated boost converters connected in parallel. Such converters are used to step up the input voltage and distribute the output power efficiently across various loads. The parallel configuration enables higher current handling capacity and redundancy, which is critical for reliability in large-scale systems such as telecommunications infrastructure, industrial automation, and electric vehicle charging systems.

However, in existing systems, a major challenge arises during the power-on sequence of such converters. When multiple converters are powered on independently, they do not always start at the same time or follow a coordinated sequence due to time differences in their respective turn-on events due to differences in SMPS (Switch mode power supply) wake-up time. Such uncoordinated startup leads to uneven voltage levels among the converters on the shared output bus, which can result in circulating currents or unequal load distribution. In the absence of synchronization, one converter may begin supplying current before others, effectively charging the entire output bus capacitance on its own, leading to sudden inrush currents.

Such inrush conditions can activate the Overcurrent Protection (OCP) features of the converters. When OCP is triggered prematurely, some converters may shut down, while others may continue to operate under stress. This imbalance not only interrupts the power delivery but also imposes electrical and thermal stress on the active converters. Repeated exposure to such conditions can degrade semiconductor components, reduce system lifespan, and increase the risk of failure.

Additionally, without a mechanism for synchronized startup, the converters face difficulties in achieving accurate current sharing. Load imbalances persist, especially during transient conditions or sudden load demands. This lack of coordination complicates the control strategy and increases the burden on monitoring and protection systems. Moreover, field-level maintenance becomes more frequent due to component stress and protection-triggered shutdowns, thereby increasing operational costs and reducing system uptime. Despite various control and communication methods in use, the absence of a reliable and fast synchronization mechanism during power-on continues to be a limiting factor in the deployment of parallel non-isolated boost converter systems.

Thus, there is a need for a system for synchronization of multiple non-isolated boost converters in a power supply to overcome the above-mentioned challenges.

### OBJECTS OF THE INVENTION

An object of the present invention is to provide a system that synchronizes non-isolated boost converters when power is in ON condition.

Another object of the present invention is to provide a system that protects non-isolated boost converters from short circuits.

Yet another object of the present invention is to provide a system that reduces the current stress on the individual non-isolated boost converters.

Yet another object of the present invention is to provide a system that protects semiconductor device associated with the non-isolated boost converters from failure.

Yet another object of the present invention is to provide a system that saves the multiple converters from overload current.

### SUMMARY OF THE INVENTION

This summary is provided to introduce aspects related to the present invention of a system for synchronization of multiple non-isolated boost converters in a power supply and the aspects are further described below in the detailed description. This summary is not intended to identify essential features of the claimed subject matter nor is it intended for use in determining or limiting the scope of the claimed subject matter.

In an example of the present disclosure, a power supply system is disclosed. The power supply system comprises a plurality of converters, each configured to convert a Direct Current (DC) input voltage into a DC output voltage for powering one or more output loads. The power supply system further comprises a Controller Area Network (CAN) bus communicatively coupled to the plurality of converters, configured to facilitate communication among the plurality of converters. The power supply system further comprises a triggering unit integrated within the CAN bus. The triggering unit is configured to assign one of the converters as a master converter and remaining converters as slave converters based on predefined conditions. The triggering unit is further configured to transmit one or more trigger signals, generated by the master converter, to the slave converters via the CAN bus and the triggering unit is further configured to activate switching operation of each of the slave converters in synchronization with the master converter based on one or more received trigger signals.

In an aspect of the present disclosure, the plurality of converters comprises non-isolated boost converters.

In another aspect of the present disclosure, the plurality of converters is connected in a parallel configuration to supply power to the one or more output loads.

In another aspect of the present disclosure, the power supply system further comprises a plurality of rectifiers configured to convert an Alternating Current (AC) input voltage into the DC input voltage supplied to the plurality of converters.

In another aspect of the present disclosure, each of the plurality of converters comprises a Metal Oxide Semiconductor Field Effect Transistors (MOSFET) configured to control the switching operation of the respective converter based on corresponding predefined gate voltage value.

In another aspect of the present disclosure, the predefined conditions for assigning one of the converters as the master converter and the remaining converters as the slave converters comprise at least one of a priority levels associated with each converter, serial number or ID associated with each converter, load demand, operating status, input voltage level, and communication response time.

In another aspect of the present disclosure, the power supply system further comprises a memory communicatively coupled to the triggering unit. The memory is configured to store the predefined conditions for assigning one of the converters as the master converter and the remaining converters as the slave converters and store the corresponding predefined gate voltage value of the MOSFET associated with each converter.

In an example of the present disclosure, a for synchronizing a plurality of converters is disclosed. The method comprises receiving a Direct Current (DC) input voltage by the plurality of converters. The method further comprises converting the DC input voltage into a DC output voltage by the plurality of converters for powering one or more output loads. The method further comprises facilitating communication among the plurality of converters facilitating via a Controller Area Network (CAN) bus. The method further comprises assigning one of the converters as a master converter and the remaining converters as slave converters by a triggering unit integrated within the CAN bus based on one or more predefined conditions. The method further comprises generating one or more trigger signals by the master converter for synchronizing operation of the slave converters. The method further comprises transmitting the one or more trigger signals by the triggering unit from the master converter to the slave converters via the CAN bus. The method further comprises activating switching operation of each slave converter in synchronization with the master converter by the triggering unit based on the one or more received trigger signals.

In an aspect of the present disclosure, the plurality of converters comprises non-isolated boost converters.

In another aspect of the present disclosure, the plurality of converters is connected in a parallel configuration to supply power to the one or more output loads.

In another aspect of the present disclosure, the power supply system further comprises a plurality of rectifiers configured to convert an Alternating Current (AC) input voltage into the DC input voltage supplied to the plurality of converters.

In another aspect of the present disclosure, each of the plurality of converters comprises a Metal Oxide Semiconductor Field Effect Transistors (MOSFET) configured to control the switching operation of the respective converter based on corresponding predefined gate voltage value.

In another aspect of the present disclosure, the predefined conditions for assigning one of the converters as the master converter and the remaining converters as the slave converters comprise at least one of a priority levels associated with each converter, serial number or ID associated with each converter, load demand, operating status, input voltage level, and communication response time.

In another aspect of the present disclosure, the power supply system further comprises a memory communicatively coupled to the triggering unit. The memory is configured to store the predefined conditions for assigning one of the converters as the master converter and the remaining converters as the slave converters and store the corresponding predefined gate voltage value of the MOSFET associated with each converter.

Other aspects and advantages of the invention will become apparent from the following description, taken in conjunction with the accompanying drawings, illustrating by way of example the principles of the invention.

### BRIEF DESCRIPTION OF THE DRAWINGS

The accompanying drawings constitute a part of the description and are used to provide further understanding of the present invention. The drawings illustrate exemplary examples of the present invention and, together with the description, serve to explain the principles of the present invention.
**Fig. 1** illustrates a block diagram of plurality of converters connected with an output load within a power supply system.
**Fig. 2** illustrates a block diagram of the power supply system for synchronizing operation of the plurality of converters connected in parallel configuration during power ON event.
**Fig. 3** illustrates an exemplary waveform graph depicting the power on events of breaker Metal-Oxide-Semiconductor Field-Effect Transistors (MOSFETs) corresponding to eight parallel-connected converters.
**Figs. 4a** and **4b** cumulatively illustrate a flowchart of a method for synchronizing operation of the plurality of converters connected in parallel configuration during power ON event.

A more complete understanding of the present invention and its examples thereof may be acquired by referring to the following description and the accompanying drawings.

### DETAILED DESCRIPTION OF THE INVENTION

Exemplary examples now will be described with reference to the accompanying drawings. The disclosure may, however, be embodied in many different forms and should not be construed as limited to the examples set forth herein; rather, these examples are provided so that this disclosure will be thorough and complete, and will fully convey its scope to those skilled in the art. The terminology used in the detailed description of the particular exemplary examples illustrated in the accompanying drawings is not intended to be limiting. In the drawings, like numbers refer to like elements.

It is to be noted, however, that the reference numerals used herein illustrate only typical examples of the present subject matter, and are therefore, not to be considered for limiting its scope, for the subject matter may admit to other equally effective examples.

The specification may refer to "an", "another", "one" or "some" example(s) in several locations.

This does not necessarily imply that each such reference is to the same example(s), or that the feature only applies to a single example. Single features of different examples may also be combined to provide other examples.

The terms "or" and "and/or" as used herein are to be interpreted as inclusive or meaning any one or any combination. Therefore, "A, B or C" or "A, B and/or C" mean "any of the following: A; B; C; A and B; A and C; B and C; A, B and C." An exception to this definition will occur only when a combination of elements, functions, steps or acts are in some way inherently mutually exclusive.

As used herein, the singular forms "a", "an" and "the" are intended to include the plural forms as well, unless expressly stated otherwise. It will be further understood that the terms "include", "comprises", "including" and/or "comprising" when used in this specification, specify the presence of stated features, integers, steps, operations, elements, and/or components, but do not preclude the presence or addition of one or more other features, integers, steps, operations, elements, components, and/or groups thereof. It will be understood that when an element is referred to as being "connected" or "coupled" to another element, it can be directly connected or coupled to the other element or intervening elements may be present. Furthermore, "connected" or "coupled" as used herein may include operatively connected or coupled. As used herein, the term "and/or" includes any and all combinations and arrangements of one or more of the associated listed items.

Unless otherwise defined, all terms (including technical and scientific terms) used herein have the same meaning as commonly understood by one of ordinary skills in the art to which this disclosure pertains. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

The detailed description includes specific details for the purpose of providing a thorough understanding of the present invention. However, it will be apparent to those skilled in the art that the present invention may be practiced without these specific details.

The present examples relate to a power supply system configured for synchronizing the power-on operation of a plurality of non-isolated boost converters connected in parallel. In conventional systems, when multiple converters are powered on simultaneously without coordination, there is a high likelihood of asynchronous turn-on events, which may result in Overcurrent Protection (OCP) trips, unbalanced current sharing, and stress on semiconductor components. The disclosed system addresses these challenges by implementing a synchronization mechanism using a Controller Area Network (CAN) bus that enables one converter to function as a master and trigger the simultaneous activation of breaker MOSFETs across all converters within a tightly controlled window (e.g., <100 microseconds). The system may further include a memory for storing threshold values to monitor and protect the converters from fault conditions. This coordinated startup sequence ensures smooth load sharing, mitigates false tripping, enhances operational reliability, and reduces component stress during power-on events.

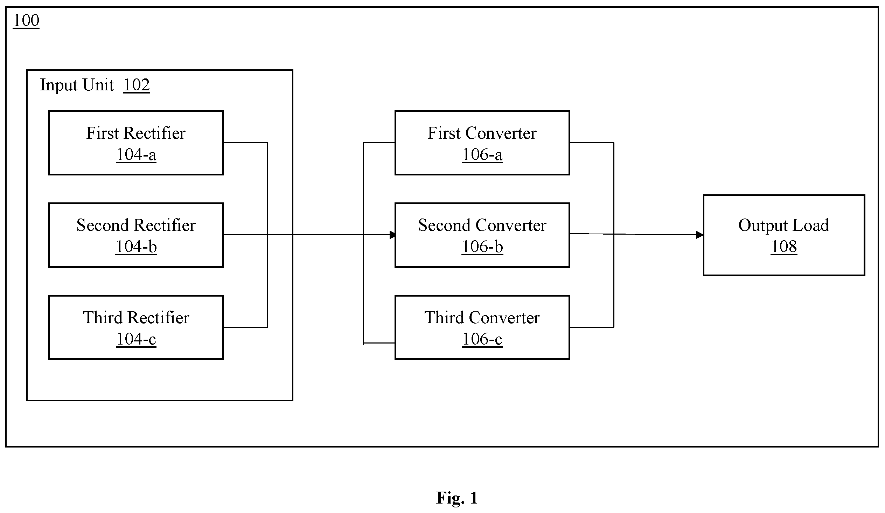

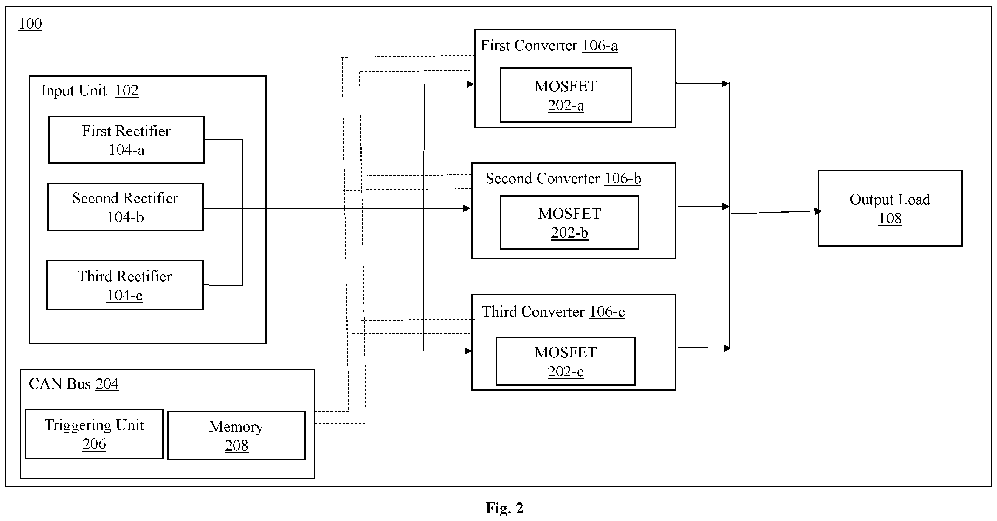

**Fig. 1** illustrates a block diagram of plurality of converters **106** connected with an output load **108** within a power supply system **100** (The power supply system **100** is further described in detailed manner in **Fig. 2****).** As shown in **Fig. 1****,** a power supply system **100** is disclosed. The power supply system **100** may include an input unit **102.** The input unit **102** may include a plurality of rectifiers **104.** In one exemplary implementation, the input unit **102** may include a first rectifier **104-a,** a second rectifier **104-b,** and a third rectifier **104-c.** (Hereinafter, for ease of explanation the plurality of rectifiers **104** also referred as rectifier **104).** Each rectifier **104** is configured to receive an Alternating Current (AC) input voltage from a primary power source and convert the AC voltage into a regulated Direct Current (DC) input voltage.

In one implementation, the rectifier **104** may have a 230V capacity and is configured to convert 230V AC to 48V DC. Such DC output voltage is subsequently supplied for further processing. The use of the plurality of rectifiers **104** enables phase balancing, enhanced current handling capability, and system-level redundancy. The rectifiers **104** may be connected in parallel such that their output currents are combined to supply the required DC input voltage for further processing. In another implementation, other types or configurations of rectifiers **104** may be used depending on the power supply system requirements. Furthermore, the output of the rectifiers **104** may be subjected to additional filtering and voltage regulation mechanisms before being supplied to other components for further processing.

The power supply system **100** may further include a plurality of converters **106.** The regulated DC output generated by the rectifiers **104** is supplied to the plurality of converters **106.** In one exemplary implementation the plurality of converters **106** may include a first converter **106-a,** a second converter **106-b,** and a third converter **106-c.** (Hereinafter, for ease of explanation the plurality of converters **106** also referred as converters **106).** Each of the converters **106** is configured to perform a DC-DC power conversion operation, where the received DC input voltage is converted into a regulated DC output voltage suitable for powering one or more loads. In one implementation, the plurality of converters **106** comprises non-isolated boost converters.

A non-isolated boost converter is a type of DC-DC converter that increases or "boosts" the input DC voltage to a higher output DC voltage without providing galvanic isolation between the input and output. Unlike isolated converters, the non-isolated boost converters do not use a transformer to separate the input and output sides. The non-isolated boost converters typically utilize a combination of switching elements such as Metal Oxide Semiconductor Field Effect Transistors (MOSFETs), inductors, and control circuitry to regulate the voltage boost operation with high efficiency.

In one implementation, the converters **106a, 106b, 106c** are connected in a parallel configuration, such that they share the input DC voltage supplied by the rectifiers **104** and collaboratively supply current to one or more loads. Such parallel topology enables effective current sharing among the converters **106a.....160c,** improves the overall reliability of the power supply system **100,** and provides modular scalability allowing additional converters **106** to be added or removed depending on the power requirements. The parallel operation also ensures increased total output current capability, which is beneficial in high-power applications where a single converter **106** would not be sufficient to meet the load demand.

The power supply system **100** may further include an output load **108** that represents the load subsystem electrically coupled to the outputs of the plurality of converters **106.** The output load **108** may comprise one or more electrically powered devices, circuits, or systems that require stable and regulated DC power for operation. In one implementation, the output load **108** may include data servers, telecommunications infrastructure, industrial control equipment, or battery management and charging systems, depending on the application environment. The cumulative regulated DC output from the plurality of converters **106** is supplied to the output load **108** in a coordinated and balanced manner to ensure continuous, stable, and high-quality power delivery.

**Fig.** 2 illustrates a block diagram of the power supply system **100** for synchronizing operation of the plurality of converters **106** connected in parallel configuration during power ON event. As shown in **Fig. 2****,** the power supply system **100** may include the input unit **102.** The input unit **102** may include the plurality of rectifiers **104.** In one exemplary implementation, the input unit **102** may include the first rectifier **104-a,** the second rectifier **104-b,** and the third rectifier **104-c.** (Hereinafter, for ease of explanation the plurality of rectifiers **104** also referred as rectifier **104).** Each rectifier **104** is configured to receive an Alternating Current (AC) input voltage from a primary power source and convert the AC voltage into a regulated Direct Current (DC) input voltage. The primary source may include utility grid, generator, or UPS.

In one implementation, the rectifiers **104** may have a 230V capacity and is configured to convert 230V AC to 48V DC. Such DC output voltage is subsequently supplied for further processing. The use of the plurality of rectifiers **104** enables phase balancing, enhanced current handling capability, and system-level redundancy. In one implementation, the rectifiers **104** may be connected in parallel such that their output currents are combined to supply the required DC input voltage for further processing. In another implementation, other types or configurations of rectifiers **104** may be used depending on the power supply system requirements. Furthermore, the output of the rectifiers **104** may be subjected to additional filtering and voltage regulation mechanisms before being supplied to other components for further processing. The rectifiers **104** may be implemented using Silicon-Controlled Rectifiers (SCRs), full-bridge diode configurations, or active Power Factor Correction (PFC) circuits. The output from each rectifier **104** may be smoothed using LC filters and connected in parallel to provide a common regulated DC voltage output.

The power supply system **100** may further include the plurality of converters **106.** The regulated DC output generated by the rectifiers **104** is supplied to the plurality of converters **106.** In one exemplary implementation the plurality of converters **106** may comprises a first converter **106-a,** a second converter **106-b,** and a third converter **106-c.** (Hereinafter, for ease of explanation the plurality of converters **106** also referred as converters **106).** Each of the converters **106** is configured to perform a DC-DC power conversion operation, where the received DC input voltage is converted into a regulated DC output voltage suitable for powering one or more loads. In one implementation, the plurality of converters **106** comprises non-isolated boost converters.

The non-isolated boost converter is a type of DC-DC converter that increases or "boosts" the input DC voltage to a higher output DC voltage without providing galvanic isolation between the input and output. Unlike isolated converters, the non-isolated boost converters don't use a transformer to separate the input and output sides. The non-isolated boost converters typically utilize a combination of switching elements such as Metal Oxide Semiconductor Field Effect Transistors (MOSFETs), inductors, and control circuitry to regulate the voltage boost operation with high efficiency.

In one implementation, the converters **106** are connected in a parallel configuration, such that they share the input DC voltage supplied by the rectifiers **104** and collaboratively supply current to one or more loads. Such parallel topology enables effective current sharing among the converters **106,** improves the overall reliability of the power supply system **100,** and provides modular scalability allowing additional converters **106** to be added or removed depending on the power requirements. The parallel operation also ensures increased total output current capability, which is beneficial in high-power applications where a single converter 106 would not be sufficient to meet the load demand.

The power supply system **100** may further include a plurality of breaker MOSFETs **202** operatively associated with each of the plurality of converters **106.** In one exemplary implementation, the plurality of breaker MOSFETs **202** may comprises a first breaker MOSFET **202-a,** a second breaker MOSFET **202-b,** and a third breaker MOSFET **202-c.** (Hereinafter, for ease of explanation the plurality of breaker MOSFETs also referred as MOSFETs **202).** Each converter **106** is equipped with its own MOSFET **202,** which is configured to control the electrical connection between the converter's output terminal and the common output line leading to the one or more loads. The MOSFET **202** may act as a high-speed electronic switch that enables or disables current flow from its corresponding converter **106** to the one or more load. During a power-on event, the timely activation of the MOSFETs **202** is critical to avoid inrush currents or output voltage disturbances. The MOSFETs **202** typically remain in the OFF state until a trigger signal is received, upon which they are turned ON simultaneously to ensure synchronized current contribution from all converters **106.**

Each MOSFET **202** typically include three terminals: Gate (G), Drain (D), and Source (S). The Source terminal is connected to the output of the respective converter **106,** while the Drain terminal is connected to the common output line that supplies power to the one or more load. The Gate terminal receives a control voltage signal which determines the ON/OFF state of the MOSFET **202.** In the present examples, the Gate terminal of each MOSFET **202** remains at a voltage below a predefined threshold during standby or inactive states, thereby keeping the MOSFET in an OFF state and preventing any current flow.

To enable coordination of the MOSFETs **202** during the power-on sequence, the power supply system **100** may include a Controller Area Network (CAN) bus **204** that is communicatively connected to the plurality of converters **106.** The CAN bus **204** is a robust serial communication protocol commonly used in industrial and automotive systems for real-time data exchange between distributed components. In the present example, the CAN bus **204** facilitates communication between the converters **106** for the purpose of role assignment and synchronization during the power-on event. Each converter **106** may be equipped with a CAN transceiver and microcontroller or control logic capable of sending and receiving CAN messages. Such networked communication ensures coordinated operation and minimizes latency in executing synchronization signals across the converters **106.**

The power supply system **100** may further include a triggering unit **206,** integrated within the CAN bus **204** and is critical to the coordination and synchronization of the plurality of converters **106** during a power-on event. The triggering unit **206** is configured to initiate and manage the sequencing logic that ensures all converters **106** are brought active in a synchronized manner to prevent electrical stress or protective shutdowns. At the time of initialization, the triggering unit **206** dynamically assigns operational roles to the converters **106,** designating one converter **106** as a master converter and the remaining as slave converters. The selection of the master converter is based on predefined conditions. The predefined conditions may include priority levels associated with each converter, serial number or ID associated with each converter, load demand, operating status, input voltage level, and communication response time.

Once the master converter is selected, the triggering unit **206** enables the master converter to initiate one or more synchronization trigger signals. The trigger signal is broadcasted across the CAN bus **204** to all slave converters. However, before the master converter issues the trigger signal, the triggering unit **206** performs a set of predefined safety and readiness checks. Such include verifying that the gate terminal voltage of each MOSFET **202** associated with the corresponding converters **106** is below a specified threshold voltage value, indicating that all MOSFETs **202** are currently in an OFF state.

Upon successful validation of all safety conditions, the trigger signal is transmitted by the master converter over the CAN bus **204.** This trigger signal is received by all the slave converters, prompting each converter **106** to drive the gate terminal of its respective MOSFET **202** above the ON threshold voltage. As a result, all MOSFETs **202** transition from the OFF state to the ON state in near-simultaneous fashion. The transition occurs within a narrowly bounded time window, typically less than 100 microseconds. Such tight synchronization avoids any phase lag or staggered current injection that might otherwise result in inrush current surges, asymmetric load distribution, or Overcurrent Protection (OCP) activation. By ensuring that all converters **106** activate uniformly and concurrently, the triggering unit **206** thus plays a pivotal role in load balancing, thermal stability, and the long-term reliability of the power supply system **100.**

The power supply system **100** may further include a memory **208** communicatively coupled with the triggering unit **206.** The memory **208** may store store the predefined conditions for assigning one of the converters as the master converter and the remaining converters as the slave converters, the corresponding predefined gate voltage value of the MOSFET **202** associated with each converter **106** and historical diagnostic information. During the synchronization process, the memory **208** may enable each converter **106** to retrieve pre-configured startup sequences and timing constraints to ensure adherence to the synchronization protocol. Additionally, the memory **208** may record activation times and system behavior during power-on events for future analysis or fault diagnosis. Such enhances the reliability and maintainability of the power supply system **100** by allowing retrospective evaluation in the event of any operational anomaly.

The power supply system **100** may further include the output load **108** that represents the load subsystem electrically coupled to the outputs of the plurality of converters **106.** The output load **108** may comprise one or more electrically powered devices, circuits, or systems that require stable and regulated DC power for operation. In one implementation, the output load **108** may include data servers, telecommunications infrastructure, industrial control equipment, or battery management and charging systems, depending on the application environment. The cumulative regulated DC output from the plurality of converters **106** is supplied to the output load **108** in a coordinated and balanced manner to ensure continuous, stable, and high-quality power delivery.

In one implementation, the power supply system **100** may incorporates the OCP mechanism where a predefined power threshold of 3kW is monitored for each converter **106.** If the power drawn by any individual converter **106** exceeds this 3kW threshold, the power supply system **100** transitions into a fault mode, during which other functionalities may be halted to protect the system from damage. As a consequence, the OCP mechanism may be triggered, resulting in a shutdown of not only the affected converter **106** but also the remaining converters **106** connected in parallel.

Additionally, during the initial power-on phase, all background system processes remain temporarily non-functional except for the CAN communication functionality, which remains active to manage coordination and synchronization among the converters **106.** Such controlled startup behavior prevents false tripping events and enables the converters **106** to effectively share the load during transient high-load conditions, particularly when a rapid load is connected to the common output bus. The synchronization achieved via this mechanism ensures a smooth power-on transition, minimizes current surges, and significantly reduces stress on semiconductor devices, thereby enhancing the reliability and longevity of the overall power supply system **100.**

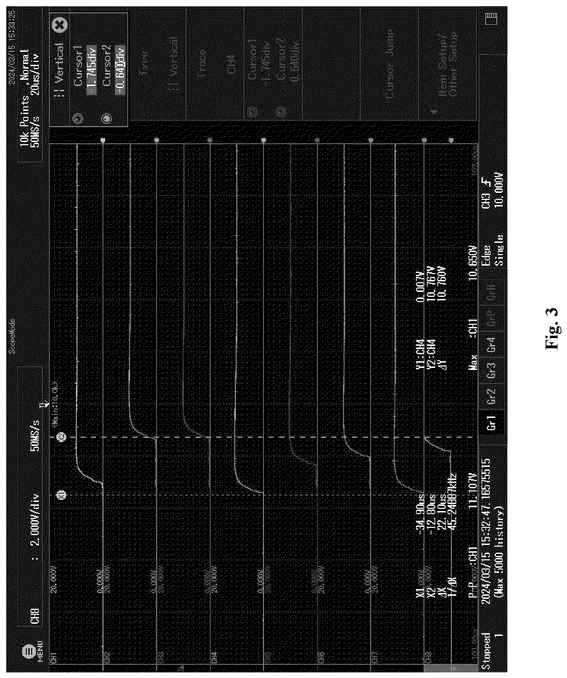

**Fig. 3** illustrates an exemplary waveform graph depicting the power ON events of MOSFETs **202** corresponding to eight parallel-connected converters **106.** Each waveform trace denotes gate terminal voltage of respective MOSFET **202** initiating conduction in response to a common synchronization trigger signal. The trigger signal is transmitted by a designated master converter over the CAN bus **204** as part of the system's synchronization mechanism.

As depicted in **Fig. 3****,** all eight MOSFETs transition to their ON states within a narrow timing window of less than 100 microseconds. Such coordinated switching behavior validates the effectiveness of the triggering unit **206** and synchronization protocol implemented in the power supply system **100.** The near-simultaneous activation of MOSFETs **202** mitigates the likelihood of overcurrent protection faults during the power-on event and facilitates uniform current sharing among the converters **106,** thereby enhancing system reliability, reducing stress on power semiconductor components, and ensuring stable power delivery to the output load **108.**

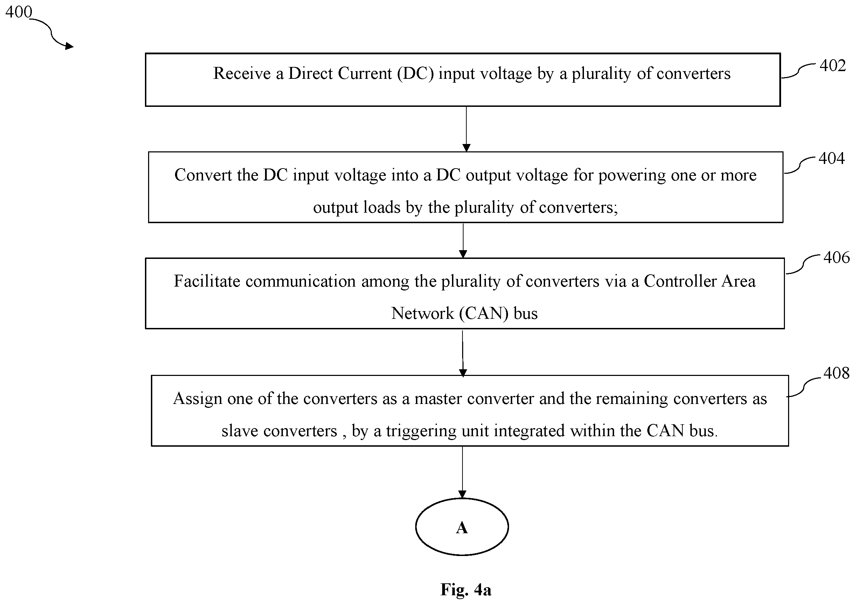

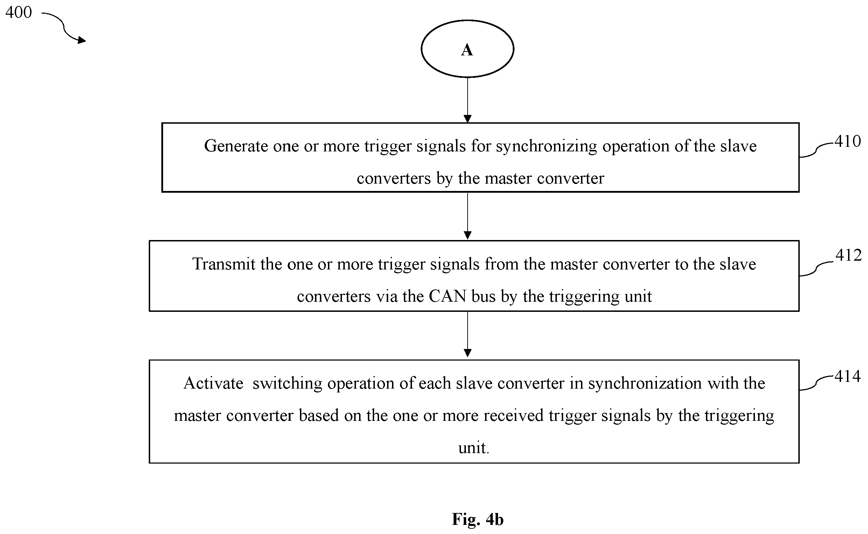

**Figs. 4a** and **4b** cumulatively illustrate a flowchart of a method **400** for synchronizing operation of the plurality of converters **106** connected in parallel configuration during power ON event. In this regard, each block may represent a module, segment, or portion of code, which comprises one or more executable instructions for implementing the specified logical function(s). It should also be noted that in some alternative implementations, the functions noted in the blocks may occur out of the order noted in the drawings. For example, two blocks shown in succession in **Fig. 4** may be executed substantially concurrently, depending upon the functionality involved. Any process descriptions or blocks in flow charts should be understood as representing modules, segments, or portions of code which include one or more executable instructions for implementing specific logical functions or steps in the process, and alternate implementations are included within the scope of the example examples in which functions may be executed out of order from that shown or discussed, including substantially concurrently, depending on the functionality involved. In addition, the process descriptions or blocks in flow charts should be understood as representing decisions made by a hardware structure such as a state machine.

At step **402,** each converter receives DC input voltage that is supplied by rectifiers converting alternating current AC from the power source into DC. This common DC input voltage is available to all converters simultaneously through a shared DC bus or power line. The rectifiers ensure a stable and regulated DC supply, which the converters use to generate their respective output voltages for powering the loads. Although the converters are connected to the same DC input, they do not start switching immediately. Instead, they remain ready in a standby mode, awaiting synchronization signals to ensure their operation is coordinated and to prevent any sudden current surges that could damage the system.

At step **404,** Once powered, each converter is capable of transforming the received input voltage into a desired direct current output voltage to drive one or more downstream loads. Such loads may include electric drive motors, onboard controllers, lighting systems, or any other power electronics subsystems requiring regulated DC input. However, in the synchronized system design described herein, actual conversion begins only after the converters receive coordinated control signals. The converters are configured with internal power conversion circuitry, such as switching MOSFETs and inductors, but keep these components inactive until a valid synchronization signal is received. This step establishes the capability of each converter to perform voltage conversion, but delays activation until controlled synchronization is executed, thereby preventing electrical stress and ensuring smooth operation.

At step **406,** to enable coordination among the converters, a CAN bus is employed as the backbone communication medium. Each converter includes a communication transceiver and embedded firmware logic to interface with the bus. The CAN bus allows peer-to-peer and broadcast communication with deterministic timing and built-in error handling. Through this interface, each converter can exchange vital information, including its operational status, readiness signal, fault flags, and synchronization timestamps. The communication over the CAN bus ensures that all converters are logically connected and can operate in a distributed yet coordinated manner. Additionally, the CAN bus forms the channel through which master-slave roles are negotiated and synchronization commands are distributed during the system's boot-up phase or when recovering from fault conditions.

At step **408,** to ensure coherent activation of all converters, a triggering unit is implemented within the CAN bus that initiates the assignment of roles. This unit monitors the status of all converters and dynamically assigns one of them as the master converter based on predefined conditions such as may include priority levels associated with each converter, serial number or ID associated with each converter, load demand, operating status, input voltage level, and communication response time. The remaining converters are designated as slave converters. This assignment mechanism is critical to avoid contention or ambiguity during synchronization. The triggering unit ensures that there is exactly one master responsible for issuing control signals, while all others are placed in a synchronized waiting state. This logical hierarchy forms the foundation for deterministic startup and coordination among converters connected in parallel. The triggering unit operates entirely over the CAN, utilizing its addressing and messaging protocols to communicate role assignments.

At step **410,** once the master converter is determined, it generates one or more trigger signals intended to initiate synchronized switching operation across all converters. These trigger signals may be structured as digital control packets, encoded pulses, or synchronization frames that mark the precise instance when switching action must begin. The timing of these signals is tightly controlled, with jitter and latency minimized to microsecond-level precision. The trigger signals contain information such as start commands, synchronization flags, or phase alignment data, depending on the complexity of the system. The generation of these signals by the master ensures that a single time reference governs the activation sequence of all converters, thereby achieving tight coordination and minimizing the risk of power-on transients or inrush-related faults.

At step **412,** the trigger signals produced by the master converter are transmitted to all slave converters using the CAN bus. The CAN bus ensures real-time, low-latency delivery of these control packets, with error-checking mechanisms to guarantee integrity. Each slave converter, upon receiving the trigger signal, decodes it to extract activation timing and switching parameters. In systems with advanced timing requirements, the trigger signal may also include synchronization counters or timestamps to facilitate precise alignment. This coordinated signal distribution ensures that all converters operate from the same switching cycle and start simultaneously, eliminating phase mismatches and power disturbances at the load.

At step **414,** upon reception of the trigger signal, each slave converter initiates its internal switching operation in synchronization with the master converter. This involves enabling gate drivers, initiating PWM control, and turning on switching elements such as the MOSFETs. The switching frequency, duty cycle, and phase are all aligned as per the master's control signal. This tight synchronization ensures that current is evenly distributed among the converters and that no converter lags or leads in power delivery. The simultaneous activation helps prevent overcurrent protection triggers, reduces electromagnetic interference due to staggered switching, and enhances the overall power integrity of the system. Furthermore, this step finalizes the synchronized power-on process, enabling stable and balanced power delivery to the connected output load with minimal startup transients or thermal stresses.

### Technical Advancement and Economic Significance

The system for synchronization of multiple non-isolated boost converters in a power supply disclosed in the present example may have the following advantages:
- Ensures synchronized activation of the plurality of converters during power-on, thereby eliminating overcurrent protection trips commonly caused by asynchronous startup.
- Enhances the operational stability of power supply systems by coordinating the turn-on behavior of converters, especially under high-load conditions.
- Minimizes electrical and thermal stress on switching devices (e.g., MOSFETs) by avoiding current surges during unsynchronized power-up events.
- Enables uniform and balanced load distribution among parallel-connected converters through tightly timed activation, improving system efficiency.
- Allows seamless integration and control of additional converters without hardware modification, by dynamically assigning master-slave roles over a CAN bus.

Although implementations of system for synchronization of multiple non-isolated boost converters in a power supply have been described in language specific to structural features and/or methods, it is to be understood that the appended claims are not necessarily limited to the specific features or methods described. Rather, the specific features and methods are disclosed as examples of implementations of system for synchronization of multiple non-isolated boost converters in a power supply.

Further examples are set out in the clauses below:
1.A power supply system comprising:
   a plurality of converters, each configured to convert DC input voltage into DC output voltage for powering one or more output loads;
   a Controller Area Network CAN bus communicatively coupled to the plurality of converters, configured to facilitate communication among the plurality of converters; and
   a triggering unit integrated within the CAN bus, wherein the triggering unit is configured to:
      assign one of the plurality of converters 106 as a master converter and remaining converters as slave converters based on one or more predefined conditions,
      transmit one or more trigger signals, generated by the master converter, to the slave converters via the CAN bus; and
      activate switching operation of each of the slave converters in synchronization with the master converter based on one or more received trigger signals.
2.The power supply system as claimed in clause 1, the plurality of converters comprises non-isolated boost converters.
3.The power supply system as claimed in clause 1 or 2, the plurality of converters is connected in a parallel configuration to supply power to the one or more output loads.
4.The power supply system as claimed in any one of the preceding clauses, further comprises a plurality of rectifiers configured to convert an Alternating Current AC input voltage into the DC input voltage supplied to the plurality of converters.
5.The power supply system as claimed in any one of the preceding clauses, wherein each of the plurality of converters comprises a Metal Oxide Semiconductor Field Effect Transistors MOSFET configured to control the switching operation of the respective converter based on corresponding predefined gate voltage value.
6.The power supply system as claimed in any one of the preceding clauses, the predefined conditions for assigning one of the converters as the master converter and the remaining converters as the slave converters comprise at least one of a priority levels associated with each converter, serial number/ ID associated with each converter, load demand, operating status, input voltage level, and communication response time.
7.The power supply system as claimed in any one of the preceding clauses, further comprises a memory communicatively coupled to the triggering unit, wherein the memory is configured to:
   store the predefined conditions for assigning one of the converters as the master converter and the remaining converters as the slave converters; and
   store the corresponding predefined gate voltage value of MOSFET associated with each converter.
8.A method for synchronizing a plurality of converters in a power supply system, comprising:
   deploying, via a Controller Area Network CAN bus, communication among the plurality of converters wherein each converter is adapted to convert DC input voltage into DC output voltage for powering one or more output loads;
   assigning, by a triggering unit integrated within the CAN bus, one of the converters as a master converter and the remaining converters as slave converters based on one or more predefined conditions;
   generating, by the master converter, one or more trigger signals for synchronizing operation of the slave converters;
   transmitting, by the triggering unit, the one or more trigger signals from the master converter to the slave converters via the CAN bus; and
   activating, by the triggering unit, switching operation of each slave converter in synchronization with the master converter based on the one or more received trigger signals.
9.The method as claimed in clause 8, the plurality of converters comprises non-isolated boost converters.
10.The method as claimed in clause 8 or 9, the plurality of converters is connected in a parallel configuration to supply power to the one or more output loads.
11.The method as claimed in any one of clauses 8-10, wherein each of the plurality of converters comprises a Metal Oxide Semiconductor Field Effect Transistors MOSFET configured to control the switching operation of the respective converters based on corresponding predefined gate voltage value.
12.The method as claimed in any one of clauses 8-13, the predefined conditions for assigning one of the converters as the master converter and remaining converters as the slave converters comprise at least one of a priority levels associated with each converter, serial number/ID associated with each converter, load demand, operating status, input voltage level, and communication response time.
13.The method as claimed in any one of clauses 8-12, further comprising:
   storing the predefined conditions for assigning one of the converters as the master converter and the remaining as the slave converters; and
   storing predefined gate voltage value of the MOSFET associated with each converter.

## Claims

1. A power supply system (100) comprising:
a plurality of converters (106), each configured to convert DC input voltage into DC output voltage for powering one or more output loads (108);
a Controller Area Network CAN bus (204) communicatively coupled to the plurality of converters (106), configured to facilitate communication among the plurality of converters (106); and
a triggering unit (206) integrated within the CAN bus (204), wherein the triggering unit (206) is configured to:
assign one of the plurality of converters (106) as a master converter and remaining converters as slave converters based on one or more predefined conditions,
transmit one or more trigger signals, generated by the master converter, to the slave converters via the CAN bus (204); and
activate switching operation of each of the slave converters in synchronization with the master converter based on one or more received trigger signals.

2. The power supply system (100) as claimed in claim 1, the plurality of converters (106) comprises non-isolated boost converters.

3. The power supply system (100) as claimed in claim 1 or 2, the plurality of converters (106) is connected in a parallel configuration to supply power to the one or more output loads (108).

4. The power supply system (100) as claimed in any one of claims 1-3, further comprises a plurality of rectifiers (104) configured to convert an Alternating Current AC input voltage into the DC input voltage supplied to the plurality of converters (106).

5. The power supply system (100) as claimed in any one of the preceding claims, wherein each of the plurality of converters (106) comprises a Metal Oxide Semiconductor Field Effect Transistors MOSFET (202) configured to control the switching operation of the respective converter (106) based on corresponding predefined gate voltage value.

6. The power supply system (100) as claimed in any one of the preceding claims, the predefined conditions for assigning one of the converters (106) as the master converter and the remaining converters as the slave converters comprise at least one of a priority levels associated with each converter (106), serial number/ ID associated with each converter, load demand, operating status, input voltage level, and communication response time.

7. The power supply system (100) as claimed in any one of the preceding claims, further comprises a memory (208) communicatively coupled to the triggering unit (206), wherein the memory (208) is configured to:
store the predefined conditions for assigning one of the converters (106) as the master converter and the remaining converters as the slave converters; and
store the corresponding predefined gate voltage value of MOSFET (202) associated with each converter (106).

8. A method (400) for synchronizing a plurality of converters (106) in a power supply system, comprising:
deploying, via a Controller Area Network CAN bus (204), communication among the plurality of converters (106) wherein each converter (106) is adapted to convert DC input voltage into DC output voltage for powering one or more output loads (108);
assigning, by a triggering unit integrated within the CAN bus (204), one of the converters (106) as a master converter and the remaining converters as slave converters based on one or more predefined conditions;
generating, by the master converter, one or more trigger signals for synchronizing operation of the slave converters;
transmitting, by the triggering unit (206), the one or more trigger signals from the master converter to the slave converters via the CAN bus (204); and
activating, by the triggering unit (206), switching operation of each slave converter in synchronization with the master converter based on the one or more received trigger signals.

9. The method as claimed in claim 8, the plurality of converters (106) comprises non-isolated boost converters.

10. The method as claimed in claim 8 or 9, the plurality of converters (106) is connected in a parallel configuration to supply power to the one or more output loads (108).

11. The method as claimed in any one of claims 8-10, wherein each of the plurality of converters (106) comprises a Metal Oxide Semiconductor Field Effect Transistors MOSFET (202) configured to control the switching operation of the respective converters (106) based on corresponding predefined gate voltage value.

12. The method as claimed in any one of claims 8-11, the predefined conditions for assigning one of the converters (106) as the master converter and remaining converters as the slave converters comprise at least one of a priority levels associated with each converter, serial number/ID associated with each converter, load demand, operating status, input voltage level, and communication response time.

13. The method as claimed in any one of claims 8-12, further comprising:
storing the predefined conditions for assigning one of the converters (106) as the master converter and the remaining as the slave converters; and
storing predefined gate voltage value of the MOSFET (202) associated with each converter (106).
